Europäisches Patentamt

European Patent Office

Office européen des brevets

(19)

(11) Veröffentlichungsnummer: **0 234 439 B1**

(12) **EUROPÄISCHE PATENTSCHRIFT**

(45) Veröffentlichungstag der Patentschrift: **02.05.91**

(51) Int. Cl.⁵: **F16N 39/06, F01D 25/18**

(21) Anmeldenummer: **87102026.9**

(22) Anmeldetag: **13.02.87**

(54) Strömungsmaschine mit Versorgungseinrichtung für Schmiermittel.

(30) Priorität: **21.02.86 DE 3605619**

(43) Veröffentlichungstag der Anmeldung:
**02.09.87 Patentblatt 87/36**

(45) Bekanntmachung des Hinweises auf die
Patenterteilung:
**02.05.91 Patentblatt 91/18**

(84) Benannte Vertragsstaaten:
**CH FR GB IT LI**

(56) Entgegenhaltungen:
**EP-A- 0 154 098**
**FR-A- 2 299 898**
**US-A- 2 949 977**
**US-A- 3 041 832**
**US-A- 3 325 088**

(73) Patentinhaber: **MTU MOTOREN- UND
TURBINEN-UNION MÜNCHEN GMBH
Dachauer Strasse 665 Postfach 50 06 40
W-8000 München 50(DE)**

(72) Erfinder: **Streifinger, Helmut
Jachenauer Strasse 7
W-8000 München 70(DE)**

## Beschreibung

Die Erfindung betrifft eine Strömungsmaschine, insbesondere Gasturbine, mit Mitteln zur zentrifugalen Trennung eines Öl-/Luftgemisches und Rückführung ausgeschleuderter Öltröpfchen über eine Hauptwelle in einen Kreislauf mit Verbraucher, wie Lagerstellen und mit einer vom Zentrum der Strömungsmaschine nach außen führenden Entlüftungsleitung, wobei die Trennmittel innerhalb einer hohlen Hauptwelle der Strömungsmaschine angeordnet sind, und das Öl-/Luftgemisch innerhalb der Hauptwelle der Strömungsmaschine den zentralen Trennmitteln zuströmt.

Ganz allgemein besteht bei Strömungsmaschinen, insbesondere Gasturbinen, das Problem der Trennung oder Abscheidung von Luft aus dem verbrauchten Öl, welches in der Regel mit Blasen durchsetzt ist. Erst solchermaßen gereinigtes und eventuell gekühltes Öl ist zur Rückführung in einen Kreislauf mit Verbrauchern, wie Lagerstellen, geeignet.

Bei Triebwerken von Flugzeugen sind meist mehrere Wellen vorgesehen, wovon eine Hauptwelle den Verdichter und die Turbine miteinander verbindet. Bei Wellentriebwerken hat man bereits eine Ölfangkammer der Hohlwelle zugeordnet. Die bekannte Lösung kann Schwierigkeiten bereiten einerseits hinsichtlich der Abluftführung und andererseits der Öldruckführung durch Zentrifugalkraft. Bekannte Lösungen sind daher entweder für große Luftmengen schlecht geeignet, oder die Abscheidungswirkung ist nicht befriedigend, weil z.B. bei hoher Ausströmungsgeschwindigkeit Öltröpfchen mit der Entlüftungsluft mitgerissen werden können.

Aus US-A-3,325,088 ist bekannt, die Schwerkraft in einer vertikal angeordneten Hohlwelle zur Trennung eines Flüssigkeits-Gasgemisches zu nutzen, mit dem Nachteil, daß ein erheblicher Anteil an Flüssigkeitströpfchen mit dem Gas entweicht und die Achsrichtung der Hohlwelle und damit der Strömungsmaschine vom Gravitationsfeld vorgegeben wird.

Eine Verbesserung für die Gasreinigung von Flüssigkeitströpfchen stellt die aus EP-A-0 154 098 bekannte Vorrichtung dar, die die Merkmale des Oberbegriffes des Anspruchs 1 zeigt. In dieser Vorrichtung werden zentrifugale Trennmittel in Form von Zentrifugalscheiben zwischen zwei rotierenden koaxialen Hohlwellen angeordnet. Zwischen den Zentrifugalscheiben bleibt jedoch bei hohem Gasdurchsatz ein Strömungspfad frei, der nicht von den Zentrifugalscheiben erfaßt wird, so daß ein nicht vernachlässigbarer Anteil von Flüssigkeitströpfchen in die Abluft gerät.

Aus FR-A-2 299 898 ist eine Vorrichtung zur Trennung eines Flüssigkeits-Gasgemisches bekannt, bei der in einer rotierenden Kammer eine flüssigkeitsdurchlässige Matrix als zentrifugales Trennmittel die Flüssigkeit abscheidet. Ein Nachteil dieser Lösung ist, daß die Kammer auf einer von der Strömungsmaschine separaten Hohlwelle aufgeflanscht ist, so daß verlustreiche und gewichtserhöhende Zu- und Abführeinrichtungen für das Gemisch, für die Gase und für die Flüssigkeit zur Versorgung beispielsweise einer Strömungsmaschine vorzusehen sind.

Aufgabe der Erfindung ist es, eine Strömungsmaschine zu schaffen, bei der Mittel zur Trennung eines Öl-/Luftgemisches vorgesehen sind, die auch bei großen Luftmengen mit sehr hoher Abscheidungsleistung arbeiten.

Gelöst wird diese Aufgabe bei einer Strömungsmaschine der eingangs beschriebenen Gattung, dadurch, daß ein poröses luftdurchlässiges Element zwischen zwei ölundurchlässigen Wänden die hohle Hauptwelle vollständig ausfüllt und diese Wände senkrecht zur Achsrichtung der Welle stehen, daß in der stromaufwärts gelegenen Wand radial äußere Zufuhröffnungen für das Öl-/Luftgemisch angeordnet sind, die mit Öffnungen in der Hauptwelle korrespondieren und in der stromabwärts gelegenen Wand eine Luftabfuhröffnung angeordnet ist, die mit der feststehenden rotorseitigen Entlüftungsleitung in Verbindung steht.

Ausgestaltungen der Erfindung sind in Unteransprüchen enthalten. Weitere Merkmale sind der Beschreibung und Zeichnung eines Ausführungsbeispiels zu entnehmen.

Die wesentlichsten Vorteile der Erfindung sind unter anderem darin zu sehen, daO mit der Erfindung eine relativ einfache und wirksame Abscheidung in einer hohlen Hauptwelle des Triebwerks möglich ist. Dabei sind auch bei großen Luftmengen hohe Abscheidungsraten erzielbar. Das Öl-/Luftgemisch kann durch wenige relativ kleine Bohrungen in die Hohlwelle einströmen. Öl wird durch Zentrifugalkraft am Ausströmen gehindert und in die Lagerkammer zurückgeschleudert und durch die Absaugleitung zurück zum Tank gefördert.

Ein weiterer Vorteil des erfindungsgemäßen Abscheidesystems ist, daß es keine langen und außenliegenden Entlüftungsleitungen, zusammen mit ihren Befestigungselementen, benötigt. Dadurch ist Montieren und Demontieren des Triebwerks leichter (Modulbauweise).

Ein weiterer Vorteil ist, daß ein eigener oder abgeleiteter Antrieb für den Zentrifugalabscheider entfällt und somit erhebliche Gewichtsersparnisse sowie Kostenersparnis und Ersparnisse an Wartungsaufwand erzielt werden. Es entfallen zusätzliche Lager und Zahnräder für den Hilfsantrieb, ebenso wie eine zusätzliche Aufheizung des Öl-/Luftgemisches. Die Druckverluste sind gegenüber einer langen und außenliegenden Entlüftungsleitung mit Öl-/Luftgemisch erheblich geringer. Dichtheitsprobleme im Leerlauf werden vermieden. Die Zuverlässigkeit des Systems im Betrieb wird außerdem erhöht.

Der Einbau eines porösen Elements zwischen zwei Scheiben in der hohlen Hauptwelle hat vor allem den Vorteil der erhöhten Abscheideleistung auch bei großen Luftmengen. Die Art und Weise der Luftführung durch die Scheiben und das Element hindurch ist so getroffen, daß das Öl-/Luftgemisch radial außen an der stromaufwärts gelegenen Scheibe axial eintritt, zentripetal nach innen strömt und die Luft in axialer Richtung aus der stromabwärts gelegenen Scheibe zentral austritt, während das Öl durch Zentrifugalkraft nach außen abgeschleudert wird. Die Luft wird dann erfindungsgemäß vom Abscheider über eine in die hohle Hauptwelle hineinragende Entlüftungsleitung, welche mit der stromabwärts gelegenen Scheibe dicht verbunden ist, durch den Abgasstrom nach außen geführt (z.B. bis hinter die Düse). Die Entlüftungsleitung wird in vorteilhafter Weise mittels einer Dichtung abgedichtet. Diese kann mit Sperrluft aus dem Triebwerk beaufschlagt sein. In weiterer vorteilhafter Ausgestaltung kann die Entlüftungsleitung zur Kühlung doppelwandig ausgebildet sein, d.h. insbesondere zur Zuführung von Kühlluft im Mantelstrom, entgegengerichtet dem Entlüftungsstrom.

Die Anordnung Größe, Anzahl und Verteilung von Bohrungen in der Hauptwelle kann der Konstrukteur so auswählen, daß die erforderliche Luftmenge durchgesetzt werden kann, ohne die mechanische Festigkeit der Welle zu beeinträchtigen. Die Bohrungen in der stromaufwärts gelegenen Scheibe können so gewählt werden, daß einerseits eine hohe Abscheidungswirkung von Luft und andererseits eine möglichst hohe Ölrückführung in den Kreislauf erfolgt. Die axialen Bohrungen oder Ausnehmungen, bevorzugt im äußeren Randbereich der stromaufwärts gelegenen Scheibe, sollten mit Vorteil nicht kleiner gewählt sein als die Bohrungen in der Hauptwelle, um Druckverluste zu vermeiden.

Die Führung der Entlüftungsleitung ist ebenfalls nicht auf die vorbeschriebene Führung durch den heißen Teil des Triebwerks beschränkt. Wird die Luft nicht in den kalten Teil, sondern in den Abgasstrom geführt, so kann eine Abdeckplatte zum Schutz gegen zu hohe Temperaturen, insbesondere bei Nachverbrennung, und/oder ein Schutz gegen Durchzünden von Flammen in das Entlüftungsrohr, z.B. in Form eines Gitters oder Siebes, angebracht sein. In die Entlüftungsleitungen können Blenden, Ventile, Pumpen, Kühler u.a. eingebaut sein. Der Kreislauf des Öls wird bevorzugt durch eine Ölpumpe aufrechterhalten.

Mit der Erfindung ist eine einfache Entlüftungsleitungsführung über Bord bei einem Triebwerk eines Flugzeugs möglich.

Die außerdem bei der Erfindung gegebene Kühlmöglichkeit der Entlüftungsleitung vermeidet potentielle Brandherde. Die Wartungs- und Bedienungsfreundlichkeit des Systems erspart Kosten. Die wegen des Wegfalls von Hilfsantrieben ermöglichte Gewichtsersparnis gibt zusätzliche Brennstoffersparnis für das gesamte Triebwerk. Außerdem wird die Zelle des Triebwerks mit einem raumsparenden Aufbau ermöglicht und dadurch zusätzliche Gewichtseinsparungen und eine unter Umständen erheblich strömungsgünstigere Zelle bzw. Triebwerksverkleidung und/oder Aufhängung erzielt. Für verschiedenartige Verbrauchsstellen und verschiedenartige Formen von Ölkreisläufen kommt man mit nur einem einzigen Abscheider aus.

Weitere Vorteile der Erfindung ergeben sich anhand eines nachstehend beschriebenen Ausführungsbeispiels, das rein schematisch in den beigefügten Zeichnungen dargestellt ist.

Es zeigen:

Fig. 1    den Endbereich eines Triebwerks (heißer oder Turbinenteil)

Fig. 2    die gleiche Einrichtung in Ausführung für eine Abgasnachverbrennung (thermisch)

Fig. 3    einen Umriß der Strömungsmaschine und ihre Hauptwelle mit eingezeichneter Entlüftungsleitung

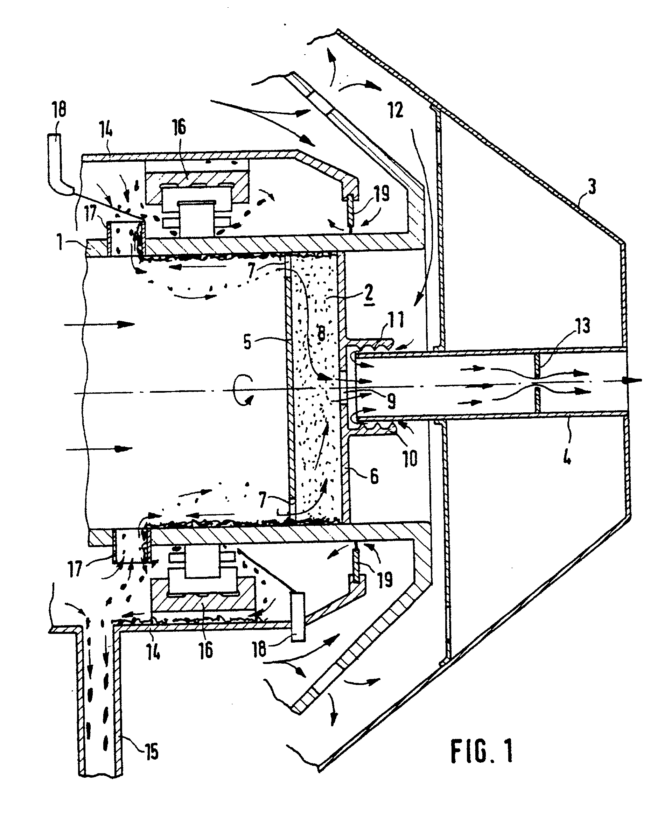

Wie aus Fig. 1 ersichtlich, ist in der Hauptwelle 1 des Triebwerks ein Ölabscheider 2 fest eingebaut, d.h. er läuft mit der Welle 1 um und im feststehenden Teil 3 des Triebwerks, hier ein Austrittkonus, von Abgas umströmt, ist zentral das Entlüftungsrohr 4 angeordnet.

Der Abscheider 2 weist zwei im wesentlichen parallel angeordnete Scheiben 5 und 6 auf, wobei die Scheibe 5 stromaufwärts im Luftgemisch angeordnet ist und die Scheibe 6 stromabwärts.

In der Scheibe 5 sind im Bereich von deren Außenumfang axiale Bohrungen 7 angeordnet, durch die das Öl/Luftgemisch in den Abscheider, hier eine Masse 8, einströmt und nach der Trennung durch eine Bohrung 9 zentral abströmt in das Entlüftungsrohr 4. Dabei ist in einem bund- und kragenartigen Fortsatz 10 der Wand 6 eine Dichtung 11, insbesondere eine Labyrinthdichtung, angeordnet, um das Entlüftungsrohr 4 abzudichten. Ferner kann noch ein Sperrluftstrom 12 vorgesehen werden. In der Entlüftungsleitung 4 ist noch ein Drosselelement 13 wie Blende, Ventilklappe oder ähnliches zur Luftmengensteuerung und/oder -begrenzung eingebaut. Die Welle 1 ist außerdem von einer Lagerkammer 14 umgeben, die sich (in Fig. 1 unten) einer Ölabfuhrleitung 15 zur Ölumlaufpumpe anschließt. In der Lagerkammer sind ein oder mehrere Lager 16 angeordnet. Diese Lager 16 bilden die Verbraucher im Ölkreislauf, danach wird das Gemisch aus Öl und Sperrluft dem Abscheider 2 zugeführt über Bohrungen 17 in für die durchzusetzende Luftmenge ausreichender Größe, Anzahl und Verteilung über den Umfang der hohlen Hauptwelle.

Die luftdurchlässige Masse zwischen den Scheiben 5 und 6 ist z.B. ein Metallschaum, wie er unter dem Warenzeichen "Retimet" im Handel ist. Auch andere Abscheidemittel sind anwendbar. Der Abstand zwischen den Bohrungen 17 und den Bohrungen 7 ist mit Vorteil klein zu wählen, um den Wärmeübergang gering zu halten. Es ist dafür Sorge zu tragen, daß beim Umlauf der Welle Öl, wenn es in die Packung eintritt, abgeschleudert wird und an der Innenwand der Hohlwelle durch die Bohrungen 17 in den Kreislauf zum Verbraucher, d.h. hier zu den Lagern 16, wieder zurückgeführt wird. Es ist ersichtlich, daß die Ölrückführungsleistung mit der Drehzahl wächst. Die Luft strömt aufgrund des Druckunterschiedes durch die zentrale Bohrung 9 in das Entlüftungsrohr 4 zur Umgebung. Das Öl, welches durch Öldüsen 18 aus dem Kreislauf, z.B. über Ölkühler und Ölpumpe, frisch zugeführt wird, bleibt in der Lagerkammer 14, infolge der Dichtung 19 hier als Bürstendichtung dargestellt. Die Öltropfen und ihr Fluß ist durch Pfeile in der Zeichnung dargestellt, ebenso sind durch Pfeile dargestellt die Luftströmungsrichtungen. Anstelle der dargestellten Dichtungen können auch andere Arten von Abdichtungen verwendet werden. Die Art und die Zahl der porösen Packungen kann je nach gewünschtem Luftdurchsatz (Menge/Zeit) verändert werden - d.h. poröser bei größerer Menge. Andererseits darf Öl auch bei Stillstand des Triebwerks nicht austreten. Die Luftmenge, die nach der Abscheidung die Öffnung 9 in der Scheibe 6 des Abscheiders 2 verläßt und in die Entlüftungsleitung eintritt, liegt bei mehr als 10 g/s. Für eine wirksame Ölabscheidung sorgt z.B. eine Umfangsgeschwindigkeit im Bereich der Innenwand der hohlen Hauptwelle 1 zwischen etwa 10 und 100 m pro Sekunde, vorzugsweise zwischen 50 und 100 m pro Sekunde. Der Druck in der Lagerkammer kann niedrig gehalten werden und ebenso die Wärmeübertragung auf das Öl.

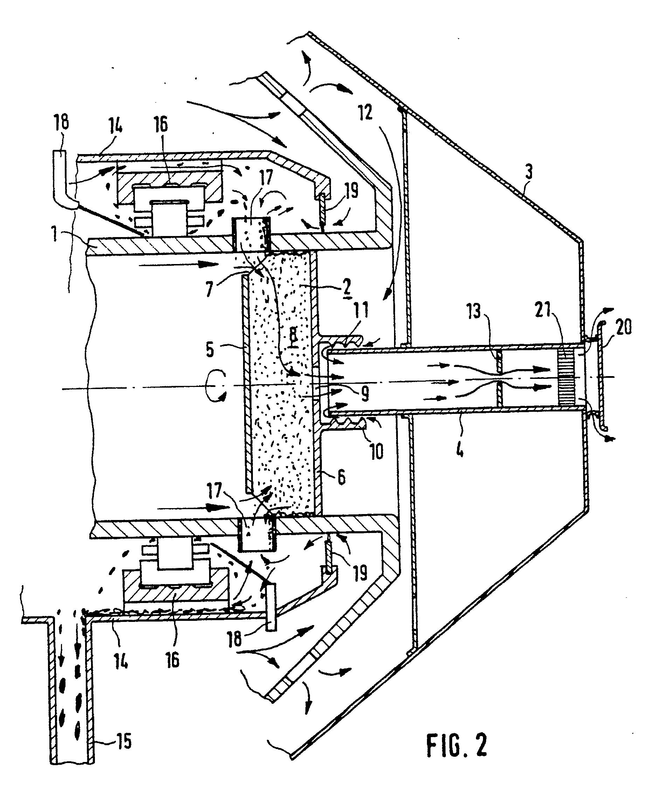

In Fig. 2 ist ein Ausführungsbeispiel ähnlich Fig. 1 ersichtlich, wobei gleiche Teile mit gleichen Bezugszeichen versehen sind. Die Bohrungen 17 in der Hauptwelle 1 haben jedoch in dieser Ausführung einen gegen Null gehenden Abstand zu den Öffnungen 7, welche den Eintritt des Öl/Luftgemisches in die poröse Packung 2 gestatten. Zusätzlich zur Ausführung nach Fig. 1 ist bei diesem Triebwerk eine thermische Nachverbrennung vorgesehen, welche sich in der Zeichnung rechts anschließend durch den Abgasstrom und dessen spezielle Führung und/oder Behandlung, wie z.B. zusätzliche Brennstoffeinspritzung, ergibt.

Zu diesem Zweck ist eine dem Wärmeschutz oder der Wärmedämmung dienende Abdeckplatte 20 vorgesehen und ein metallisches Sieb oder Gitter 21 zwecks Verhinderung etwaiger Flammenrückschläge.

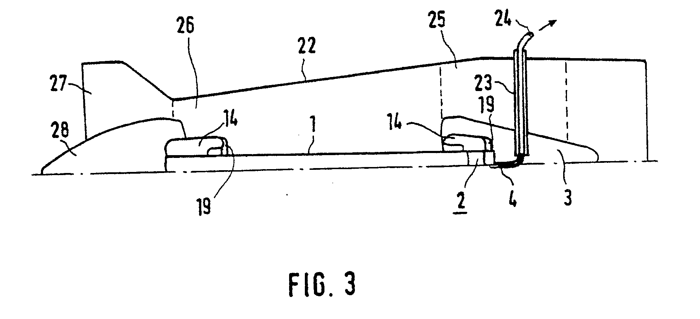

Die Abluft wird vom Abscheider 2 über eine in die Welle 1 ragende Entlüftungsleitung 4 durch den Abgasstrom und das Gehäuse aus der zu Kühlzwecken doppelwandigen Leitung 23 bei 24 über Bord austreten lassen, Fig. 3 oder durch den Austrittkonus im Abgasstrom bis hinter die Düsenmündung des Triebwerks geführt. Die Kühlung in der Mantelleitung 23 von der Entlüftungsleitung 4 wird durch Luft im Gegenstrom zum in Fig. 3 rechts oben bei 24 angedeuteten Strom der abgeschiedenen Luft erzielt. Der heiße Triebwerksbereich, hier Hochtemperatur-oder Hochdruckturbinenbereich, ist in Fig. 3 mit 25 und der Verdichterbereich mit 26 beziffert. Dargestellt ist in Fig. 3 ein Mantelstromtriebwerk mit einem Luftbypass bei 27 über einen Einlaufkonus 28, ohne daß die Erfindung hierauf beschränkt wäre. Zum Verständnis der Erfindung nicht nötige Triebwerksteile sind in die Darstellung des Ausführungsbeispiels nicht aufgenommen. Sie sind an sich bekannter Art. Wesentlich für die Erfindung ist, daß vor allem bei großen Luftdurchsätzen der Ölabscheidegrad erheblich verbessert wurde und dies bei äußerst einfachem konstruktiven Aufbau mit den entsprechenden Kosten- und Gewichtsvorteilen. Die Erfindung kombiniert die Vorteile einer herkömmlichen Abscheidepackung mit der hier vorgenommenen Anordnung in einer hohlen Hauptwelle, die z.B. Verdichter und Turbine eines Gasturbinentriebwerks verbindet (gegebenenfalls einzelne Stufen desselben). Luftmengen und Luftgeschwindigkeiten sind dabei in weiten Grenzen wählbar, mit Vorteil so, daß an der Austrittsöffnung 9 in der Scheibe 6 diese möglichst gering ist. Dagegen kann die Ölmenge, die zum Verbraucher - hier Lager - zurückgeführt wird, erheblich gesteigert werden durch die erfindungsgemäße Anordnung und Ausführung der Bohrungen in der Wand der hohlen Hauptwelle 1. Ölverluste werden selbst bei Stillstand, Leerlauf oder ähnlichen Betriebsphasen vermieden. Als Kühl- oder Sperrluft wird vorzugsweise solche verwendet, die ohnehin bereits dem Verdichter abgezapft wurde zu diesen oder ähnlichen Zwecken, so daß die Vorteile der beschriebenen Anordnung ihre Nachteile bei weitem überwiegen.

Die Anwendung der Erfindung ist nicht auf Gasturbinentriebwerke für Flugzeuge beschränkt, sondern sie kann auch bei ortsfesten Anlagen oder beliebigen Fahrzeugen angewendet werden.

Bevorzugte Ausführungsform der Erfindung ist die Fig. 2.

## Ansprüche

1. Strömungsmaschine, insbesondere Gasturbine, mit Mitteln (5,6,8) zur zentrifugalen Trennung eines Öl-/Luftgemisches und Rückführung ausgeschleuderter Öltröpfchen über eine Hauptwelle (1) in einen Kreislauf mit Verbraucher, wie Lagerstellen (14) und mit einer vom Zentrum der Strömungsmaschine nach außen führenden Entlüftungsleitung (4), wobei die Trennmittel (5,6,8) innerhalb einer hohlen Hauptwelle (1) der Strömungsmaschine angeordnet sind und das Öl-/Luftgemisch innerhalb der Hauptwelle (1) der Strömungsmaschine den zentrifugalen Trennmitteln (5,6,8) zuströmt, dadurch gekennzeichnet, daß ein poröses luftdurchlässiges Element (8); zwischen zwei ölundurchlässigen Wänden (5,6), die hohle Hauptwelle (1) vollständig ausfüllt und diese Wände (5,6) senkrecht zur Achsrichtung der Welle stehen, daß in der stromaufwärts gelegenen Wand (5) radial äußere Zufuhröffnungen (7) für das Öl-/Luftgemisch angeordnet sind, die mit Öffnungen (17) in der Hauptwelle korrespondieren und in der stromabwärts gelegenen Wand (6) eine Luftabfuhröffnung (9) angeordnet ist, die mit der feststehenden rotorseitigen Entlüftungsleitung (4) in Verbindung steht.

2. Strömungsmaschine nach Anspruch 1, dadurch gekennzeichnet, daß in der Entlüftungsleitung (4) ein den Abluftstrom drosselndes Element (13), die Blende, eingebaut ist.

3. Strömungsmaschine nach einem der vorhergehenden Ansprüche, dadurch gekennzeichnet, daß die radial äußeren Gemischzufuhröffnungen in der stromaufwärts gelegenen Wand in ihrer Größe/Querschnitt auf die Abmessungen der Öffnungen (17) in der Hauptwelle, mit denen sie korrespondieren, abgestimmt sind.

4. Strömungsmaschine nach einem der vorhergehenden Ansprüche, dadurch gekennzeichnet, daß die Öffnungen (17) in der Hauptwelle in solchem Abstand von der stromaufwärts gelegenen Wand angeordnet sind, daß durch sie abgeschleuderte Öltropfen in den Kreislauf zu einem Verbraucher (16) rückführbar sind.

5. Strömungsmaschine nach einem der vorhergehenden Ansprüche, dadurch gekennzeichnet, daß die Entlüftungsleitung im Hochtemperaturbereich der Turbine bzw. des Triebwerks angeordnet ist und zu Kühlzwecken doppelwandig ausgebildet ist.

## Claims

1. A turbo machine, particularly a gas turbine with means (5, 6, 8) for the centrifugal separation of an oil/air mixture and the return of centrifugally extracted oil droplets via a main shaft (1) into a circuit with a consumer such as bearings (14) and with, leading outwards from the centre of the turbo machine, a vent line (4), the separating means (5, 6, 8) being disposed within a hollow main shaft (1) of the turbo machine, the oil/air mixture flowing to the centrifugal separating means (5, 6, 8) inside the main shaft (1) of the turbo machine, characterised in that a porous air-permeable element (8) between two walls (5, 6) which are impervious to oil, completely fills the hollow main shaft (1) and in that these walls (5, 6) are set at right-angles to the axial direction of the shaft and in that in the wall (5) on the downstream side there are radially outer feed apertures (7) for the oil/air mixture, which correspond with apertures (17) in the main shaft and in that there is in the downstream wall (6) an air discharge orifice (9) which communicates with the fixed rotor-side vent line (4).

2. A turbo machine according to Claim 1, characterised in that an element (13) such as a diaphragm which throttles the stream of outgoing air, is built into the vent line (4).

3. A turbo machine according to one of the preceding Claims, characterised in that the radially outer mixture feed apertures (7) in the downstream wall (5) are in their size/cross-section attuned to the dimensions of the apertures (17) in the main shaft, to which they correspond.

4. A turbo machine according to one of the preceding Claims, characterised in that the apertures (17) in the main shaft are disposed at such a distance from the wall (5) on the upstream side that oil droplets which are centrifugally separated by them and passed into the circuit can be returned to a consumer (16).

5. A turbo machine according to one of the preceding Claims, characterised in that the vent line (4) is disposed in the high-temperature area of the turbine or of the propulsion unit and for cooling purposes is constructed as a double-walled line (23).

## Revendications

1. Turbomachine, notamment turbine à gaz, avec des moyens (5,6,8) pour la séparation centrifuge d'un mélange huile-air et le recyclage, par l'intermédiaire d'un arbre principal (1), de gouttelettes d'huile centrifugées, dans un circuit avec des zones d'utilisation telles que des zones de palier (14), et avec une conduite de purge d'air (4) menant du centre de la turbomachine vers l'extérieur, les moyens de séparation (5,6,8) étant logés à l'intérieur d'un arbre principal creux (1) de la turbomachine, et le mélange huile-air affluant vers les moyens de séparation centrifuge (5,6,8), à l'intérieur de l'arbre principal (1) de la turbomachine, caractérisée en ce qu'un élément poreux (8), perméable à l'airs remplit totalement l'arbre principal creux (1) entre deux parois imperméables à l'huile (5,6), ces parois étant perpendiculaires à la direction de l'axe de l'arbre, en ce que dans la paroi (5) située en amont de l'écoulement, sont agencées des ouvertures (7) d'alimentation en mélange huile-air situées radialement à l'extérieur et en correspondance avec des ouvertures (17) dans l'arbre principal, et en ce que dans la paroi (6) située en aval de l'écoulement, est agencée une ouverture d'évacuation de l'air (9) qui communique avec la conduite de purge fixe (4), côté rotor.

2. Turbomachine selon la revendication 1, caractérisée en ce qu'un élément (13) d'étranglement de l'écoulement de l'air de purge, tel qu'un diaphragme, est monté dans la conduite de purge (4).

3. Turbomachine selon l'une des revendications précédentes, caractérisée en ce que les ouvertures (7) radialement extérieures, d'alimentation en mélange, dans la paroi (5) située en amont de l'écoulement, sont adaptées, quant à leur grandeur et section, aux dimensions des ouvertures (17) réalisées dans l'arbre principal et avec lesquelles elles sont en correspondance.

4. Turbomachine selon l'une des revendications précédentes, caractérisée en ce que les ouvertures (17) dans l'arbre principal sont agencées à une distance telle de la paroi amont (5), que des gouttelettes d'huile qui en sont éjectées, peuvent être recyclées dans le circuit vers une zone d'utilisation (16).

5. Turbomachine selon l'une des revendications précédentes, caractérisée en ce que la conduite de purge est agencée dans la zone chaude de la turbine ou du groupe motopropulseur et est réalisée sous la forme d'une conduite à paroi double (23), dans un but de refroidissement.

FIG. 1

FIG. 2

FIG. 3